# EUROPEAN PATENT SPECIFICATION

(11) **EP 1 390 200 B1**
(45) Date of publication and mention of the grant of the patent: **03.05.2006**
(21) Application number: 02724330.2
(22) Date of filing: 08.05.2002
(51) Int. Cl.: B32B 37/22, B32B 3/10, B32B 3/06, E04C 2/00

(54) **METHOD FOR MANUFACTURING A SANDWICH BUILDING ELEMENT**
VERFAHREN ZUR HERSTELLUNG EINES SANDWICH-BAUELEMENTS
PROCEDE DE FABRICATION D'UN ELEMENT DE CONSTRUCTION EN SANDWICH

(30) Priority: 11.05.2001 FI 20010991
(43) Date of publication of application: 25.02.2004
(73) Proprietor: Paroc Group Oy Ab, 01300 Vantaa (FI)
(72) Inventor: HESELIUS, Lars, FIN-21600 Pargas (FI); WILLMAN, Tarmo, FIN-20780 Kaarina (FI); HALINEN, Reijo, FIN-36200 Kangasala (FI)
(74) Representative: LEITZINGER OY
(86) International application number: PCT/FI2002/000394
(87) International publication number: WO 2002/092342

(56) References cited:
- EP-A- 0 683 036
- EP-A2- 0 995 594
- GB-A- 2 227 712
- GB-A- 2 325 645
- SE-C2- 506 924
- US-A- 3 693 966
- US-A- 5 313 758

## Description

The present invention relates to a method for manufacturing a sandwich building element, said building element comprising a core, and surface layers on its two opposite main surfaces, said core being composed of lamellae of mineral wool, which are lengthwise relative to the building element and have their fibers substantially perpendicular to the surface layers, said method comprising bonding the surface layers to the core by fixing the same with the aid of an adhesive to the opposite main surfaces of the core.

Document EP-A-995594 discloses a method in which surface layer sections supplied to the line are overlapped before being temporarily joined. This type of overlapping makes it impossible to use, for example, relatively thick lamellar elements of plaster board in the said methods. Document EP-A-683036 discloses a method according to the preamble of claims 1 and 9.

It is an object of the present invention to provide an improved manufacturing method for the fabrication of sandwich building elements, said method enabling the continuous-action manufacture of building elements, yet enabling at the same time the production of minor series, even the manufacture of single building elements. In order to fulfil this objective, the inventive method is characterized as defined in the characterising part of claims 1 and 9.

In the inventive method, the sequential sections of surface layer material are preferably taped to each other in such a way that the ends of sequential sections, which are facing each other, remain at a distance from each other, the cutting action being thus applied essentially to the core only.

The inventive method enables the continuous-action running of lamellar products, as well as end-contoured elements. Noteworthy lamellar products include e.g. chipboards, fibreboard elements, and plaster boards.

The invention will now be described in more detail with reference to the accompanying drawings, in which:
- figs. 1a-1c: illustrate schematically a few steps to be implemented in a method of the invention,
- figs. 2a-2b: illustrate schematically one building element obtainable with a method of the invention,
- fig. 3: shows schematically one implementation step in a method of the invention, and
- figs. 4a-4d: illustrate schematically a few alternative embodiments for a building element, which are implementable with a method of the invention.

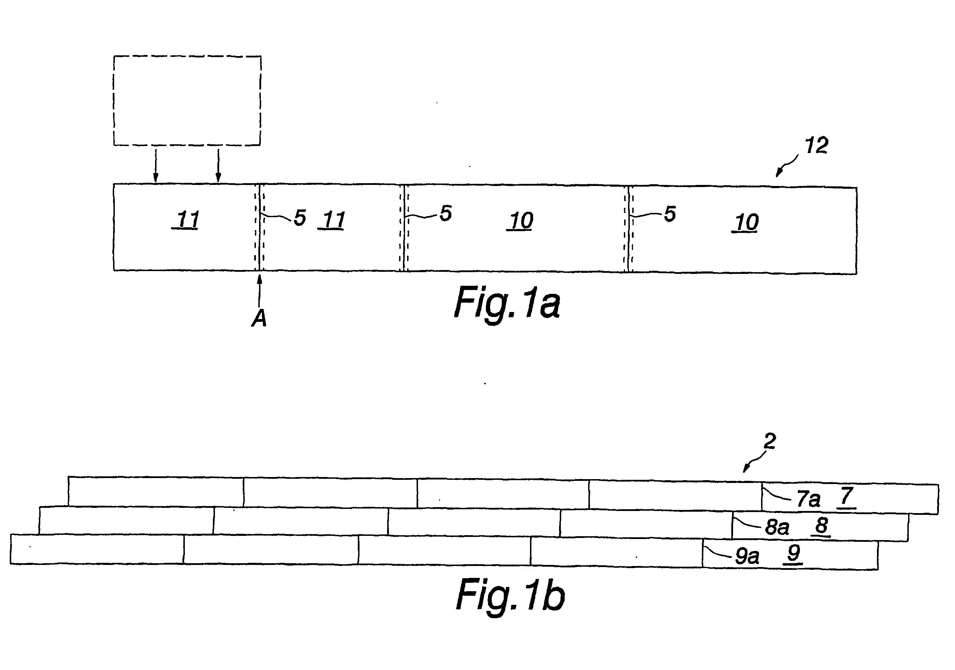

Fig. 1a illustrates schematically the disposition of sections 10, 11 of surface layer material sequentially on a production line and the taping at A for providing a junction 5 between sequential elements. The bonding is preferably effected by taping, such that the ends of sequential elements, which are facing each other, maintain a gap therebetween, which is preferably consistent with the thickness of a cutting implement, e.g. the blade of a cutting saw, used in a subsequent cutting step for separating the building elements. In the depicted embodiment, the sections 10 and 11 of surface layer material are unequal in length. Said sections may also differ from each other in terms of material, colour, width, thickness, and other properties. Naturally, the sequential sections can be perfectly identical to each other. The sections of surface layer material bonded together constitute a string of surface layer material 12. It is also conceivable that temporary bonding be effected e.g. by means of various film joints, mechanical fasteners, or plastic soldering.

The strings of surface layer material applied to the opposite main surfaces of building elements are fabricated separately from each other, and the surface layer materials for the opposite main surfaces of each building element can be identical to or different from each other.

Fig. 1b illustrates a core of mineral wool 2 with regard to its constitution. The core 2 consists of lamellar sections 7-9 of mineral wool, the fibre planes of which lie in a finished building element perpendicularly to the surface layer materials (in fig. 1b perpendicularly to the plane of paper). The lamellar sections are preferably fabricated from conventional mineral wool panel, wherein the fibres lie in a plane substantially co-directional with the main surfaces of the panel. The panel is then cut into strips, having a width which is consistent with the core thickness of a building element to be manufactured. In the next step, the strips are turned through 90° and joined laterally to each other for a mineral wool mat of lamellar structure, which is coupled behind the preceding mat, such that the lamellae of each mat are displaced in the lengthwise direction thereof relative to the adjacent lamella for establishing a continuous constitution for the core 2, as shown in fig. 1b, wherein the adjacent lamellar sections 7-9 have butt joints 7a, 8a, 9a for lamellar sections, which are staggered relative to each other. For example, the publication US 5,313,758 discloses one way of fabricating such a core.

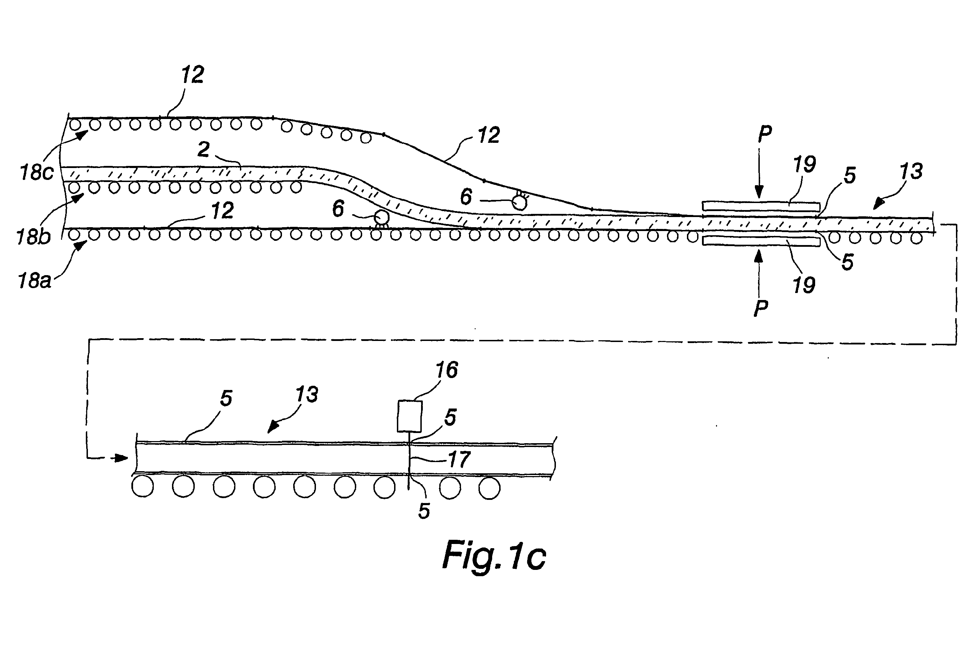

Fig. 1c shows, by way of an example, one way of laminating the core 2 with the strings 12 of surface layer material for producing a continuous string 13 of building elements. An applicator 6 is used for applying an adhesive or some other bonding agent to the inner face of the surface layer material 12 coming against the core 2, whereafter the strings 12 of surface layer material are carried by means of roller conveyors 18a and 18c against the main surfaces of the core 2 to be delivered on a roller conveyor 18b to a laminating mechanism (not shown) and subjected to an appropriate compression load P between press elements 19 included in the laminating mechanism. After the adhesive layer is set, the string 13 of building elements is cut by means of a blade 17 of a cutting device 16 for separate building elements 1 at the surface layer material junction 5, which has preferably a gap between the ends of sequential surface layer sections (the lower part of fig. 1c is shown in a scale slightly enlarged relative to the upper part for clarifying the junction gap), whereby the cutting action is essentially applied only to the core 2 and a tape that ties the sequential surface layer section to each other. This extends the blade service life substantially, and also reduces the power demand required by the cutting action.

Another conceivable implementation in reference to the invention is such that the surface layer material applied to one of the main surfaces comprises a continuous material consisting of uniform, integral material, e.g. plastic-coated sheet steel uncoiled off a coil, and only the surface layer material applied to the opposite main surface consists of said sections 10, 11 of surface layer materials, which can be identical to or different from each other and which are coupled temporarily to each other for a continuous string. Thus, the cutting of building elements, performed e.g. by sawing, is effected at the junction 5 of the temporarily joined sections 10, 11 present on one of the main surfaces, whereby the surface layer material, consisting of an integral material and present on the opposite main surface, will be cut at a corresponding location. This solution is applicable, e.g. when it is desirable to employ various facade materials while the internal surface remains unchanged.

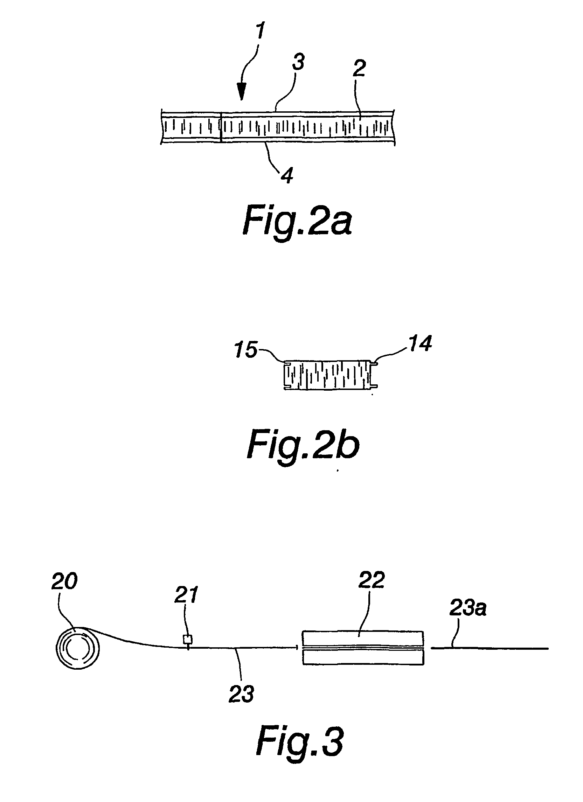

Fig. 2a and 2b depicts schematically in slightly more detail a building element 1, having a core 2 which has each of its opposite main surfaces provided with surface layers 3 and 4, the lengthwise edges thereof being in the present embodiment provided with tongue-and-groove formations.

Fig. 3 illustrates schematically an implementation, wherein the surface layer material comprises a profiled, plastic-coated sheet steel. The smooth sheet material is uncoiled off a coil 20 and delivered to a cutting device 21 for cutting surface material sections 23 of a desired length, which are supplied to a profiling mechanism 22 for providing the same with desired profiles, e.g. tongue-and-grooves for the lengthwise edges. The profiling mechanism can also be used for making various groove patterns on the surface of sheet material, e.g. in decorative and/or reinforcing purposes. In addition, the profiling of panels is conceivable as desired also over the short sides thereof (end regions), or alternatively the supply of end regions with separate end elements in view of producing cassette elements.

The profiling mechanism 23 is followed by carrying profiled sections 23a onto an assembly line for joining the same temporarily to preceding sections, as shown in fig. 1a, preferably by taping. Tight taping extending across the width of a surface layer material is the most preferred joining technique, since thereby the adhesive or other bonding agent applied to the core 2 in the process of lamination is not able to seep out of the junction and thereby to soil the mechanism and/or building elements to be fabricated and possibly to cause mechanical malfunctions.

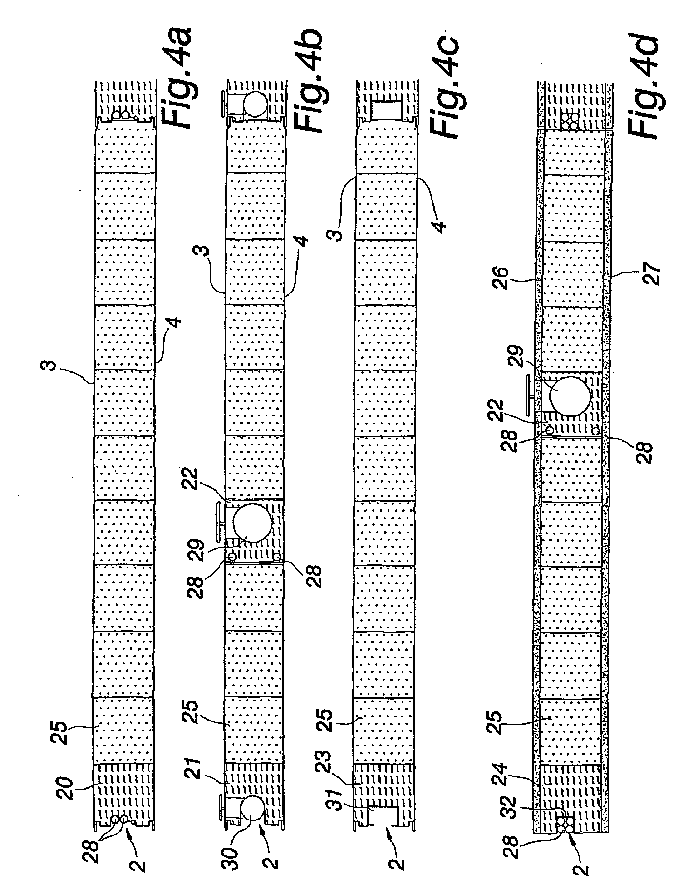

Figs. 4a-4d illustrate a few embodiments for building elements fabricable by means of a method of the invention, wherein the core 2 comprises at least two dissimilar lamellae.

In fig. 4a, one skirt lamella 20 is made of a mineral wool material which is stronger and/or better in terms of its refractory qualities than other lamellae of the core. The lamella member 20 is further formed with channels 28, e.g. for electric cables. In fig. 4b, in addition to a skirt lamella 21, a centrally located lamella 22 is also constructed from a mineral wool material stronger than the lamellae 25 and, furthermore, the skirt lamella 21 has integrated therewith a ventilation duct 30 and the lamella member 22 has integrated therewith a ventilation duct 29 and channels 28 for electric cables. In fig. 4c, a skirt lamella 23 has integrated therewith a provision 31 for accommodating for example building frame members in concealment inside a wall structure. The skirt lamella 23 is made of a material stronger than the other lamellae 25. Fig. 4d depicts an embodiment, wherein an outermost lamella 24 is formed with a provision 32, which houses cable channels 28, and the core is further provided with a centrally located lamella member 22 having a ventilation duct 29 and channels 28 for electric cables. Additionally, in the embodiment of fig. 4d, the surface layer material consists of a building board which is thicker when compared to the embodiments of figs. 4a-4c, in which the surface layer material comprises preferably plastic-coated sheet steel. Surface layer materials 26 and 27 may comprise e.g. a board including rock material, fibreboard, or plaster board.

The lamellae can also have integrated therewith a fastener or bracket element coming against the surface board for various engagement purposes. Said fastener or bracket element adheres securely to the internal face of a surface board in the process of bonding lamellae to surface boards.

## Claims

1. A method for manufacturing a sandwich building element (1), said building element comprising a core (2), and surface layers (3, 4) on its two opposite main surfaces, said core (2) being composed of lamellae (7, 8, 9) of mineral wool, which are lengthwise relative to the building element and in which the fibre planes are substantially perpendicular to the surface layers, said method comprising bonding the surface layers to the core by fixing the same with the aid of an adhesive to the opposite main surfaces of the core, **characterized in that** the method comprises also the stops of: supplying the material for the first and second surface layers in sections (10, 11) of a desired length; setting said sections sequentially, such that the downstream end of a preceding section is in abutment with the upstream end of a following section or spaced therefrom; temporarily coupling (A) the sections for establishing a first and a second continuous strings (12) of surface layer material; then bonding said strings to the opposite main surfaces of the core (2) for producing a continuous string (13) of sandwich building elements, said string of building elements having junctions (5) for the first and second strings of surface layer material located essentially in alignment with each other; and cutting the continuous string (13) of elements at the junctions (5) of surface layer materials.

2. A method as set forth in daim 1, **characterized in that** the sections of surface layer material are temporarily bonded to each other by taping, by means of a film material or with mechanical fasteners.

3. A method as set forth in any of the preceding claims, **characterized in that** the method comprises using sections of surface layer material, which are not identical in terms of their material and/or colour and/or dimensioning and which are bonded temporarily together for producing the continuous string (12) of surface layer material.

4. A method as set forth in any of the preceding claims, **characterized in that** at least some of the sections of surface layer material are made of profiled sheet metal, the sheet metal material being first cut (21) to a desired length (23), fed to a profiling mechanism (22) for profiling, and delivered, after profiling, onto a line for bonding the same to other sections of surface layer material.

5. A method as set forth in any of the preceding claims, **characterized in that** the lengthwise ends of a section of surface layer material are provided with profiled end sections prior to coupling the section temporarily with other sections.

6. A method as set forth in any of the preceding claims, **characterized in that** the building element (1) has its opposite surface layers (3, 4) composed of materials different from each other.

7. A method as set forth in any of the preceding claims, **characterized in that** the core (2) is made by using at least two lamellae (20-25) different from each other in terms of their refractory strength or other properties.

8. A method as set forth In any of the preceding claims, **characterized in that** at least one lamella has integrated therewith a channel element (28, 29).

9. A method for manufacturing a sandwich building element (1), said building element comprising a core (2), and surface layers (3, 4) on its two opposite main surfaces, said core (2) being composed of lamellae (7, 8, 9) of mineral wool, which are lengthwise relative to the building element and in which the fibre planes are substantially perpendicular to the surface layers, said method comprising bonding the surface layers to the core by fixing the same with the aid of an adhesive to the opposite main surfaces of the core, **characterized in that** the method comprises also the steps of: supplying the material for one surface layer in sections (10, 11) of a desired length; setting said sections sequentially, such that the downstream end of a preceding section is in abutment with the upstream end of a following section or spaced therefrom; an temporarly coupling (A) the sections for estabilishing a continuous string (12) of surface layer material; bonding said continous string (12) to one of the main surfaces of the core (2), the opposite-side main surface of the core (2) having bonded therewith a continuous surface layer material made of a homogeneous material for producing a continuous string (13) of sandwich building elements; and cutting said continuous string (13) of building elements at junctions (5) of said continuous string of surface layer material present on one of main surfaces.

## Patentansprüche

1. Verfahren zur Herstellung eines Sandwich-Bauelementes (1), wobei das besagte Bauelement einen Kern (2), und Oberflächenschichten (3, 4) auf seinen zwei gegenüberliegenden Hauptoberflächen umfasst, der besagte Kern (2) aus Lamellen (7, 8, 9) aus Mineralwolle zusammengesetzt ist, welche relativ zum Bauelement in Längsrichtung sind und worin die Faserebenen im wesentlichen senkrecht zu den Oberflächenschichten sind, das besagte Verfahren das Verbinden der Oberflächenschichten mit dem Kern durch Befestigen derselben mit Hilfe eines Klebstoffes an die gegenüberliegenden Hauptoberflächen des Kerns umfasst,
**dadurch gekennzeichnet, dass** das Verfahren auch die folgenden Schritte umfasst:
Bereitstellen des Materials für die erste und zweite Oberflächenschicht in Abschnitten (10, 11) einer gewünschten Länge; Anordnen der besagten Abschnitte hintereinander, so dass das stromabwärts gerichtete Ende eines vorangehenden Abschnittes am stromaufwärts gerichteten Ende eines nachfolgenden Abschnittes anliegt oder davon beabstandet ist; zeitweiliges Kuppeln (A) der Abschnitte zur Herstellung eines ersten und eines zweiten kontinuierlichen Stranges (12) des Oberflächenschichtmaterials; anschliessendes Verbinden der besagten Stränge mit den gegenüberliegenden Hauptoberflächen des Kerns (2) zu Erzeugung eines kontinuierlichen Stranges (13) von Sandwich-Bauelementen, wobei der besagte Strang von Bauelementen Verbindungsstellen (5) für den ersten und zweiten Strang von Oberflächenschichtmaterial hat, welche im wesentlichen zueinander fluchten; und Schneiden des kontinuierlichen Stranges (13) von Elementen an den Verbindungsstellen (5) des Oberflächenschichtmaterials.

2. Verfahren nach Anspruch 1, **dadurch gekennzeichnet, dass** die Abschnitte des Obertlächenschichtmaterials mittels Bandumwicklung, mittels eines Filmmaterials oder mittels mechanischer Befestigungsmittel zeitweilig miteinander verbunden werden.

3. Verfahren nach einem der vorangehenden Ansprüchen, **dadurch gekennzeichnet, dass** das Verfahren die Verwendung von Abschnitten des Oberflächenschichtmaterials umfasst, welche bezüglich ihres Materials und/oder Farbe und/oder Dimensionierung nicht identisch sind und welche zeitweilig zur Herstellung des kontinuierlichen Strangs (12) des Oberflächenschichtmaterials miteinander verbunden sind

4. Verfahren nach einem der vorangehenden Ansprüchen, **dadurch gekennzeichnet, dass** mindestens einige der Abschnitte des Oberflächenschichtmaterials aus Profil-Metallblech hergestellt sind, das Metallblechmaterial zuerst auf eine gewünschte Länge zugeschnitten (21) wird, einem Profilierungsmechanismus (22) zur Profilierung zugeführt wird, und nach dem Profilieren auf eine Bahn zur Verbindung desselben mit anderen Abschnitten des Oberflächenmaterials gefördert wird.

5. Verfahren nach einem der vorangehenden Ansprüchen, **dadurch gekennzeichnet, dass** die Längsenden eines Abschnittes des Oberflächenschichtmaterials vor dem temporären Kuppeln des Abschnittes mit anderen Abschnitten mit profilierten Endabschnitten ausgestattet werden.

6. Verfahren nach einem der vorangehenden Ansprüchen, **dadurch gekennzeichnet, dass** das Bauelement (1) einander gegenüberliegende Oberflächenschichten (3;4) aufweist, welche aus voneinander verschiedenen Materialien zusammengesetzt sind.

7. Verfahren nach einem der vorangehenden Ansprüchen, **dadurch gekennzeichnet, dass** der Kern (2) durch Verwenden von mindestens zwei Lamellen (20-25) hergestellt wird, welche bezüglich ihrer Feuerfestigkeit, Festigkeit oder andern Eigenschaften voneinander verschieden sind.

8. Verfahren nach einem der vorangehenden Ansprüchen, **dadurch gekennzeichnet, dass** mindestens eine Lamelle ein Kanalelement (28, 29) integriert hat.

9. Verfahren zur Herstellung eines Sandwich-Bauelementes (1), wobei das besagte Bauelement einen Kern (2), und Oberflächenschichten (3, 4) auf seinen zwei gegenüberliegenden Hauptvberflächen umfasst, der besagte Kern (2) aus Lamellen (7, 8, 9) aus Mineralwolle zusammengesetzt ist, welche relativ zum Bauelement in Längsrichtung angeordnet sind und worin die Faserebenen im wesentlichen senkrecht zu den Oberflächenschichten sind, das besagte Verfahren das Verbinden der Oberflächenschichten mit dem Kern durch Befestigen derselben mit Hilfe eines Klebstoffes an die gegenüberliegenden Hauptoberflächen des Kerns umfasst, **dadurch gekennzeichnet, dass** das Verfahren auch die folgenden Schritte umfasst:
Bereitstellen des Materials für eine Oberflächenschicht in Abschnitten (10, 11) einer gewünschten Länge; Anordnen der besagten Abschnitte hintereinander, so dass das stromabwärts gerichtete Ende eines vorangehenden Abschnittes am stromaufwärts gerichteten Ende eines nachfolgenden Abschnittes anliegt oder davon beabstandet ist; zeitweiliges Kuppeln (A) der Abschnitte zur Herstellung eines kontinuierlichen Stranges (12) des Oberflächenschichtmaterials; Verbinden des besagten kontinuierlichen Stranges (12) mit einer der Hauptobertlächen des Kerns (2), wobei die gegenüberliegende Hauptoberfläche des Kerns (2) mit einem kontinuierlichen, aus einem homogenen Material hergestellten Oberflächenschichtmaterial verbunden ist, zur Erzeugung eines kontinuierlichen Stranges (13) von Sandwich-Bauelementen; und Schneiden des besagten kontinuierlichen Stranges (13) von Bauelementen an Verbindungsstellen (5) des besagten, auf einer Hauptoberfläche vorhandenen kontinuierlichen Stranges des Oberflächenschichtmaterials.

## Revendications

1. Procédé de fabrication d'un élément de construction en sandwich (1), ledit élément de construction comprenant un noyau (2) et des couches de surface (3, 4) sur ses deux surfaces principales opposées, ledit noyau (Z) étant composé de lamelles (7, 8, 9) en laine de roche, étendues dans le sens de la longueur par rapport à l'élément de construction et dans lesquelles les plans de fibres sont essentiellement perpendiculaires aux couches de surface, ledit procédé comprenant le collage des couches de surface sur le noyau en fixant celles-ci à l'aide d'un adhésif sur les surfaces principales opposées du noyau, **caractérisé en ce que** le procédé comprend également les étapes consistant à: fournir la matière pour les première et deuxième couches de surface sous la forme de sections (10, 11) d'une longueur souhaitée; arranger lesdites sections d'une façon séquentielle, de telle sorte que l'extrémité aval d'une section précédente soit placée bout à bout avec l'extrémité amont d'une section suivante ou soit espacée de celle-ci; coupler temporairement (A) les sections pour établir une première et une deuxième chaînes continues (12) de matière des couches de surface; coller ensuite lesdites chaînes sur les surfaces principales opposées du noyau (2) pour produire une chaîne continue (13) d'éléments de construction en sandwich, ladite chaîne d'éléments de construction comportant des jonctions (5) pour les première et deuxième chaînes de matière des couches de surface situées essentiellement en alignement les unes avec les autres; et couper la chaîne continue (13) d'éléments aux jonctions (5) des matières des couches de surface.

2. Procédé selon la revendication 1, **caractérisé en ce que** les sections de matière des couches de surface sont temporairement liées les unes aux autres en employant des bandes adhésives, au moyen d'une matière de film ou à l'aide d'attaches mécaniques.

3. Procédé selon l'une quelconque des revendications précédentes, **caractérisé en ce que** le procédé comprend l'utilisation de sections de matière des couches de surface, qui ne sont pas identiques en termes de matière les composant et/ou de couleur et/ou de dimensions et qui sont temporairement liées les unes aux autres pour produire la chaîne continue (12) de matière des couches de surface.

4. Procédé selon l'une quelconque des revendications précédentes, **caractérisé en ce qu'**au moins quelques-unes des sections de matière des couches de surface sont constituées d'un métal en feuille profilée, la matière de métal en feuille étant d'abord coupée (21) à une longueur désirée (23), conduite vers un mécanisme de profilage (22) pour être profilée, et délivrée, après le profilage, sur une ligne pour lier celles-ci à d'autres sections de matière des couches de surface.

5. Procédé selon l'une quelconque des revendications précédentes, **caractérisé en ce que** les extrémités dans le sens de la longueur d'une section de matière des couches de surface sont pourvues de sections d'extrémité profilées avant le couplage temporaire de la section à d'autres sections.

6. Procédé selon l'une quelconque des revendications précédentes, **caractérisé en ce que** les couches de surface opposées (3, 4) de l'élément de construction (1) sont composées de matières différentes les unes par rapport aux autres.

7. Procédé selon l'une quelconque des revendications précédentes, **caractérisé en ce que** le noyau (2) est formé en utilisant au moins deux lamelles (20-25) différentes l'une de l'autre quant à leurs propriétés réfractaires, de résistance ou autres.

8. Procédé selon l'une quelconque des revendications précédentes, **caractérisé en ce qu'**au moins une lamelle comprend un élément de canal (28, 29) intégré à celle-ci.

9. Procédé de fabrication d'un élément de construction en sandwich (1), ledit élément de construction comprenant un noyau (2) et des couches de surface (3, 4) sur ses deux surfaces principales opposées, ledit noyau (2) étant composé de lamelles (7, 8, 9) en laine de roche, étendues dans le sens de la longueur par rapport à l'élément de construction et dans lesquelles les plans de fibres sont essentiellement perpendiculaires aux couches de surface, ledit procédé comprenant le collage des couches de surface sur le noyau en fixant celles-ci à l'aide d'un adhésif sur les surfaces principales opposées du noyau, **caractérisé en ce que** le procédé comprend également les étapes consistant à: fournir la matière pour une couche de surface sous la forme de sections (10, 11) d'une longueur souhaitée; arranger lesdites sections d'une façon séquentielle, de telle sorte que l'extrémité aval d'une section précédente soit placée bout à bout avec l'extrémité amont d'une section suivante ou soit espacée de celle-ci; coupler temporairement (A) les sections pour établir une chaîne continue (12) de matière des couches de surface; coller ladite chaîne continue (12) sur une des surfaces principales du noyau (2), la surface principale opposée du noyau (2) comportant, collée sur celle-ci, une matière des couches de surface continue constituée d'une matière homogène pour produire une chaîne continue (13) d'éléments de construction en sandwich; et couper ladite chaîne continue (13) d'éléments de construction en sandwich à des jonctions (5) de ladite chaîne continue de matière des couches de surface présente sur l'une des surfaces principales.
